# EUROPEAN PATENT APPLICATION

(11) **EP 3 051 877 A1**
(43) Date of publication of application: **03.08.2016**
(21) Application number: 14800496.3
(22) Date of filing: 04.06.2014
(51) Int. Cl.: H04W 36/30

(54) **CELL HANDOVER METHOD AND APPARATUS**

(30) Priority: 25.09.2013 CN 201310443114
(71) Applicant: ZTE Corporation, Shenzhen, Guangdong 518057 (CN)
(72) Inventor: XU, Yingqi, Shenzhen Guangdong 518057 (CN); HUANG, Yada, Shenzhen Guangdong 518057 (CN); YU, Yuanfang, Shenzhen Guangdong 518057 (CN); CHEN, Yuqin, Shenzhen Guangdong 518057 (CN)
(74) Representative: Deambrogi, Edgardo
(86) International application number: PCT/CN2014/079183
(87) International publication number: WO 2014/187389

(57) **Abstract**

Provided are a cell HandOver (HO) method and device. The method includes that: when a preset HO triggering condition is met, User Equipment (UE) sends HO notification information to a source cell (S102); the UE receives cell configuration, sent by the source cell, of at least one prepared HO target cell, and determines an HO target cell, wherein the at least one prepared HO target cell is at least one cell to which the UE is able to be handed over (S104); and the UE initiates an HO process to the HO target cell (S106). By the technical solution, the effect of effectively ensuring robustness of HO between a macro cell and a micro cell is achieved.

## Description

### Technical Field

The present disclosure relates to the field of communications, and in particular to a cell HandOver (HO) method and device.

### Background

Along with popularization of smart phones, people can access the Internet with smart phones anytime and anywhere, and typical data services such as QQ chatting, microblog refreshing and wechat have become an indispensible part in daily life of most people. Smart phones bring fun and convenience to people's life, and also sharply increase data traffic, and particularly in a densely-populated place such as a commercial centre and a residential area, single cell planning has been incapable of satisfying the sharp increase of traffic, thereby seriously influencing a user experience. In order to solve these problems, the 3rd Generation Partnership Project (3GPP) proposes the concept of HetNet, that is, micro cells are additionally arranged in an existing macro cell, thereby increasing capacity of a network to meet a requirement of an increasing packet data volume. However, introduction of micro cells also brings a series of new problems, wherein robustness of HO between a macro cell and a micro cell is one of typical problems.

In an existing protocol, complete cell HO simultaneously involves a control plane process and user plane process of User Equipment (UE). The control plane process mainly involves signalling interaction during HO, while the user plane process mainly involves forwarding of user data. The control plane process and the user plane process will be introduced below respectively.

The control plane process involved in HO mainly includes the following steps.
(1) A Radio Resource Control (RRC) layer of the UE performs layer 3 filtering on a neighbour cell signal measurement result reported by a physical layer, compares the filtered value with a signal strength measurement result of a current serving cell of the UE to judge whether an entering condition of event A3 (one of measurement events) is met or not, and triggers a Time-To-Trigger (TTT) timer if the entering condition of event A3 is met.
(2) The UE still performs measurement and comparative judgment on a signal of a neighbour cell during operation of the TTT timer, and if the filtered neighbour cell signal strength measurement result reported by the physical layer meets the entering condition of event A3 during operation of the TTT timer, the UE sends a Measurement Report (MR) (including the measurement results of the serving cell and the neighbour cell) to an Evolved Node B (eNodeB) (source eNodeB) of the serving cell after timeout of the TTT timer.
(3) The current serving cell (source cell) of the UE initiates an HO preparation process for a cell included in the MR after receiving the MR. In the process, the source cell receives an HO Command (CMD) (i.e. an RRC Connection Reconfiguration Message (Msg) generated by the HO target cell, carrying radio resource configuration information required by HO of the UE to the HO target cell) sent by the cell (i.e. the HO target cell) through an X2 interface.
(4) The source cell sends the HO CMD to the UE after the HO preparation process is completed.
(5) The UE initiates a random access process to the HO target cell after receiving the HO CMD sent by the source cell.
(6) After the UE implements access to the HO target cell, the HO target cell initiates a Path Switch process with a Mobility Management Entity (MME) to further trigger a bearer modification process between the MME and a Serving GateWay (S-GW).
(7) After the process in "(6)" is implemented, an eNodeB of the HO target cell may send a UE Context Release Msg to the eNodeB of the source cell to promote the eNodeB of the source cell to release a radio resource related to the UE.

The user plane process involved in HO mainly includes the following steps.
(1) The eNodeB of the source cell starts forwarding user plane data of the UE to the eNodeB of the HO target cell after sending the HO CMD, and then the eNodeB of the HO target cell caches the received user plane data.
(2) After the random access process is completed, the UE starts performing user plane data interaction with the HO target cell, that is, the UE has established a direct radio bearer with the HO target cell.
(3) After the control plane process described in "(6)" is completed, the eNodeB of the source cell starts performing user plane data interaction with the S-GW, that is, a bearer therebetween has been established.

In addition, in the abovementioned control plane signalling and user plane data interaction processes, a physical layer and a Radio Link Control (RLC) layer in a radio interface protocol stack respectively ensure correct reception of signalling and data by adopting an Automatic Repeat Request (ARQ) mechanism and a Hybrid ARQ (HARQ) mechanism. In the ARQ mechanism, a sender sends a Polling bit to a receiver to trigger the receiver to feed back a STATUS Report to the sender, thereby enabling the sender to judge whether the receiver has correctly received the data or not. In the HARQ mechanism, the receiver may feed back an Acknowledgement/Negative Acknowledgement (Ack/Nack) to the sender to enable the sender to learn whether the receiver has correctly received the data or not.

The HO process and important mechanisms involved in the process adopted in the related art are mainly described above. From the above, it can be seen that a long time (TTT+Handover Preparation Procedure) is required from triggering of event A3 to sending of an HO CMD in the HO process adopted in the related art. In a HetNet scenario, when UE moves from a macro cell to a micro cell, signal strength of the micro cell (i.e. an HO target cell) may rapidly increase because a cell radius of the micro cell is smaller. If waiting for a long time according to an existing protocol, the UE, which still takes the macro cell (i.e. a source cell) as a serving cell, is very likely to go deep into the micro cell to make it impossible to receive or correctly receive an HO CMD sent by the source cell under excessive interference of the micro cell, thereby causing an HO failure, seriously influencing robustness of HO of the UE and further influencing performance of a network. Moreover, such a condition is more obvious in case of higher operation speed of the UE.

For the problem that the cell HO method performed according to the existing protocol has serious influence on robustness of HO of UE in a related technology, there is yet no effective solution.

### Summary

The embodiments of the present disclosure provide a cell HO method and device, so as to solve the problem.

According to one embodiment of the present disclosure, a cell HO method is provided, which may be applied to a UE side, including that: when a preset HO triggering condition is met, UE sends HO notification information to a source cell; the UE receives cell configuration, sent by the source cell, of at least one prepared HO target cell, and determines an HO target cell, wherein the at least one prepared HO target cell is at least one cell to which the UE is able to be handed over; and the UE initiates an HO process to the HO target cell.

In an example embodiment, the preset HO triggering condition may include at least one of: an entering condition of a preset measurement event; a preset measurement event meeting a reporting condition; reception of indication information sent by the source cell; and reception of indication information sent by a neighbour cell of the source cell.

In an example embodiment, the HO notification information may include at least one of: identification information of at least one cell meeting an entering condition of a measurement event; type information of the at least one cell meeting an entering condition of a measurement event; measurement results of the at least one cell meeting an entering condition of a measurement event; and a measurement result of the source cell.

In an example embodiment, the cell configuration may include: an identifier of the at least one prepared HO target cell, the number of which is a preset number; and radio resource configuration information required by initiation of the HO process of the UE to the at least one prepared HO target cell.

In an example embodiment, the UE may determine the HO target cell in a manner as follows: the UE determines the HO target cell according to measurement results obtained in a process of executing cell measurement operation.

In an example embodiment, the step that the UE determines the HO target cell according to the measurement results may include that: the UE selects, according to the cell configuration, a cell with an optimal measurement result from the at least one prepared HO target cell as the HO target cell; or, the UE randomly selects, according to the cell configuration, one cell from at least one prepared HO target cell, of which the measurement results reach a preset threshold value, as the HO target cell, and if the measurement results of all of the at least one prepared HO target cell do not reach the preset threshold value, the UE selects a cell with a highest signal strength from the at least one prepared HO target cell as the HO target cell.

In an example embodiment, the step that the UE initiates the HO process to the HO target cell may include that: the UE sends HO target cell information to the source cell, and initiates the HO process to the HO target cell after receiving success Ack information which is fed back by the source cell and configured to indicate a receiving success; or, the UE sends the HO target cell information to the source cell, and initiates the HO process to the HO target cell; or, the UE directly initiates the HO process to the HO target cell.

In an example embodiment, the step that the UE determines the HO target cell according to the measurement results may include that: the UE determines a cell with an optimal measurement result as the HO target cell, wherein the cell with the optimal measurement result is a cell in the at least one prepared HO target cell or a cell except the at least one prepared HO target cell.

In an example embodiment, the step that the UE initiates the HO process to the HO target cell may include that: if the HO target cell determined by the UE is a cell in the at least one prepared HO target cell, the UE sends the HO target cell information to the source cell, and initiates the HO process to the HO target cell after receiving the success Ack information which is fed back by the source cell and configured to indicate the receiving success; or, the UE sends the HO target cell information to the source cell, and initiates the HO process to the HO target cell; or, the UE directly initiates the HO process to the HO target cell; and if the HO target cell determined by the UE is a cell except the at least one prepared HO target cell, the UE sends the HO target cell information to the source cell, and initiates the HO process according to an HO CMD sent by the source cell after receiving the HO CMD.

In an example embodiment, the HO target cell information may include at least one of: an identifier of the HO target cell and a signal strength measurement result of the HO target cell.

In an example embodiment, the success Ack information may include at least one of following information: an HARQ-Ack indicator sent by a physical layer of the source cell; and a STATUS Report of a measurement result, sent by an RLC layer of the source cell, of the HO target cell.

In an example embodiment, after the step that the UE sends the HO target cell information to the source cell, the method may further include that: under a condition that the UE does not receive the success Ack information or receives failure Ack information configured to indicate a receiving failure and the UE confirms that the source cell does not successfully receive the HO target cell information, the UE executes one of following operations that: the HO process is stopped; the HO process is stopped, and an RRC connection reestablishment process is initiated; and the HO process is directly initiated to the HO target cell.

According to another embodiment of the present disclosure, a cell HO device is provided, which may be located in UE, including: a sending component, configured to, when a preset HO triggering condition is met, send HO notification information to a source cell; a processing component, configured to receive cell configuration, sent by the source cell, of at least one prepared HO target cell, and determine an HO target cell, wherein the at least one prepared HO target cell is at least one cell to which the UE is able to be handed over; and an initiation component, configured to initiate an HO process to the HO target cell.

According to another embodiment of the present disclosure, a cell HO method is provided, which may be applied to a UE side, including that: UE receives cell configuration, sent by a source cell, of at least one prepared HO target cell, wherein the at least one prepared HO target cell is at least one cell to which the UE is able to be handed over; the UE determines an HO target cell; and the UE initiates an HO process to the HO target cell.

In an example embodiment, the cell configuration may include: an identifier of the at least one prepared HO target cell, the number of which is a preset number; and radio resource configuration information required by initiation of the HO process of the UE to the at least one prepared HO target cell.

In an example embodiment, the UE may determine the HO target cell in a manner as follows: the UE determines the HO target cell according to measurement results obtained in a process of executing cell measurement operation.

In an example embodiment, the step that the UE determines the HO target cell according to the measurement results may include that: the UE selects, according to the cell configuration, a cell with an optimal measurement result from the at least one prepared HO target cell as the HO target cell; or, the UE randomly selects, according to the cell configuration, one cell from at least one prepared HO target cell, of which the measurement results reach a preset threshold value, as the HO target cell, and if the measurement results of all of the at least one prepared HO target cell do not reach the preset threshold value, the UE selects a cell with a highest signal strength from the at least one prepared HO target cell as the HO target cell.

In an example embodiment, the step that the UE initiates the HO process to the HO target cell may include that: the UE sends HO target cell information to the source cell, and initiates the HO process to the HO target cell after receiving success Ack information which is fed back by the source cell and configured to indicate a receiving success; or, the UE sends the HO target cell information to the source cell, and initiates the HO process to the HO target cell; or, the UE directly initiates the HO process to the HO target cell.

In an example embodiment, the step that the UE determines the HO target cell according to the measurement results may include that: the UE determines a cell with an optimal measurement result as the HO target cell, wherein the cell with the optimal measurement result is a cell in the at least one prepared HO target cell or a cell except the at least one prepared HO target cell.

In an example embodiment, the step that the UE initiates the HO process to the HO target cell may include that: if the HO target cell determined by the UE is a cell in the at least one prepared HO target cell, the UE sends the HO target cell information to the source cell, and initiates the HO process to the HO target cell after receiving the success Ack information which is fed back by the source cell and configured to indicate the receiving success; or, the UE sends the HO target cell information to the source cell, and initiates the HO process to the HO target cell; or, the UE directly initiates the HO process to the HO target cell; and if the HO target cell determined by the UE is a cell except the at least one prepared HO target cell, the UE sends the HO target cell information to the source cell, and initiates the HO process according to an HO CMD sent by the source cell after receiving the HO CMD.

In an example embodiment, the HO target cell information may include at least one of: an identifier of the HO target cell and a signal strength measurement result of the HO target cell.

In an example embodiment, the success Ack information may include at least one of following information: an HARQ-Ack indicator sent by a physical layer of the source cell; and a STATUS Report of a measurement result, sent by an RLC layer of the source cell, of the HO target cell.

In an example embodiment, after the step that the UE sends the HO target cell information to the source cell, the method may further include that: under a condition that the UE does not receive the success Ack information or receives failure Ack information configured to indicate a receiving failure and the UE confirms that the source cell does not successfully receive the HO target cell information, the UE executes one of following operations that: the HO process is stopped; the HO process is stopped, and an RRC connection reestablishment process is initiated; and the HO process is directly initiated to the HO target cell.

According to another embodiment of the present disclosure, a cell HO device is provided, which may be located in UE, including: a receiving component, configured to receive cell configuration, sent by a source cell, of at least one prepared HO target cell, wherein the at least one prepared HO target cell is at least one cell to which the UE is able to be handed over; a determination component, configured to determine an HO target cell; and an initiation component, configured to initiate an HO process to the HO target cell.

According to another embodiment of the present disclosure, a cell HO method is provided, which may be applied to a network side, including that: a source cell executes the HO preparation operation, wherein the source cell may be a serving cell of U E;
the source cell generates cell configuration of at least one prepared HO target cell according to a result of the HO preparation operation, wherein the at least one prepared HO target cell is at least one cell to which the UE is able to be handed over; the source cell sends the cell configuration to the UE; and the source cell forwards user data of the UE to an HO target cell.

In an example embodiment, the source cell may execute HO preparation operation according to at least one of following information: HO notification information sent by the UE; statistical mobility information, obtained by the source cell, of the UE; load information of the source cell; and indication information, received by the source cell, of another cell, wherein the other cell may be a neighbour cell of the source cell.

In an example embodiment, when the source cell executes the HO preparation operation according to the HO notification information, one of following manners may be adopted: the source cell initiates an HO preparation process between the source cell and a preset number of cells in at least one cell included in the HO notification information according to the HO notification information; the source cell initiates an HO preparation process between the source cell and the cell with an optimal measurement result in at least one cell included in the HO notification information according to the HO notification information; and the source cell initiates an HO preparation process between the source cell and a preset type of cell in at least one cell included in the HO notification information according to the HO notification information.

In an example embodiment, the cell configuration may include: an identifier of the at least one prepared HO target cell, the number of which is a preset number; and radio resource configuration information required by initiation of the HO process of the UE to the at least one prepared HO target cell.

In an example embodiment, the source cell may forward the user data of the UE to the HO target cell in one of manners as follows: the source cell forwards the user data to the HO target cell after successfully receiving a measurement result obtained by measurement of the UE over the HO target cell from the UE; the source cell forwards the user data to the HO target cell after receiving data forwarding indication information sent by the HO target cell; and the source cell forwards the user data to the HO target cell after receiving an End Marker sent by an S-GW.

According to another embodiment of the present disclosure, a cell HO device is provided, which may be located in a source cell on a network side, wherein the source cell may be a serving cell of UE, the device including: an execution component, configured to execute HO preparation operation; a generation component, configured to generate cell configuration of at least one prepared HO target cell according to a result of the HO preparation operation, wherein the at least one prepared HO target cell is at least one cell to which the UE is able to be handed over; a sending component, configured to send the cell configuration to the UE; and a forwarding component, configured to forward user data of the UE to an HO target cell.

According to another embodiment of the present disclosure, a cell HO method is provided, which may be applied to a network side, the method including that: a source cell executes the HO preparation operation, wherein the source cell may be a serving cell of UE; the source cell generates cell configuration of at least one prepared HO target cell according to a result of the HO preparation operation, wherein the at least one prepared HO target cell is at least one cell to which the UE is able to be handed over; the source cell sends the cell configuration to the UE; under a condition that the source cell receives HO target cell information sent by the UE, the source cell judges whether an HO target cell indicated in the HO target cell information is a cell in the at least one prepared HO target cell or not, and sends an HO CMD to the UE if a judgment result is that the HO target cell is not a cell in the at least one prepared HO target cell, wherein the HO target cell information may include: an identifier of the HO target cell and/or a signal strength measurement result of the HO target cell; and the source cell forwards user data of the UE to the HO target cell.

In an example embodiment, the source cell may execute HO preparation operation according to at least one of following information: HO notification information sent by the UE; statistical mobility information, obtained by the source cell, of the UE; load information of the source cell; and indication information, received by the source cell, of another cell, wherein the other cell may be a neighbour cell of the source cell.

In an example embodiment, when the source cell executes the HO preparation operation according to the HO notification information, one of following manners may be adopted: the source cell initiates an HO preparation process between the source cell and a preset number of cells in at least one cell included in the HO notification information according to the HO notification information; the source cell initiates an HO preparation process between the source cell and the cell with an optimal measurement result in at least one cell included in the HO notification information according to the HO notification information; and the source cell initiates an HO preparation process between the source cell and a preset type of cell in at least one cell included in the HO notification information according to the HO notification information.

In an example embodiment, the cell configuration may include: an identifier of the at least one prepared HO target cell, the number of which is a preset number; and radio resource configuration information required by initiation of the HO process of the UE to the at least one prepared HO target cell.

In an example embodiment, the source cell may forward the user data of the UE to the HO target cell in one of manners as follows: the source cell forwards the user data to the HO target cell after successfully receiving the HO target cell information sent by the UE; the source cell forwards the user data to the HO target cell after receiving data forwarding indication information sent by the HO target cell; and the source cell forwards the user data to the HO target cell after receiving an End Marker sent by an S-GW.

According to another embodiment of the present disclosure, a cell HO device is provided, which may be located in a source cell on a network side, wherein the source cell may be a serving cell of UE, the device including: an execution component, configured to execute HO preparation operation; a generation component, configured to generate cell configuration of at least one prepared HO target cell according to a result of the HO preparation operation, wherein the at least one prepared HO target cell is at least one cell to which the UE is able to be handed over; a sending component, configured to send the cell configuration to the UE; a processing component, configured to, under a condition that HO target cell information sent by the UE is received, judge whether an HO target cell indicated in the HO target cell information is a cell in the at least one prepared HO target cell or not, and send an HO CMD to the UE if a judgment result is that the HO target cell is not a cell in the at least one prepared HO target cell, wherein the HO target cell information may include: an identifier of the HO target cell and/or a signal strength measurement result of the HO target cell; and a forwarding component, configured to forward user data of the UE to the HO target cell.

According to the embodiments of the present disclosure, under a condition that the UE or the network side triggers a cell HO mechanism, the UE may determine the HO target cell according to configuration information, sent by the source cell, of at least one cell to which the UE is able to be handed over, and then the UE or the network side initiates the cell HO process, so that the problem in the related technology that the cell HO method performed according to the existing protocol has serious influence on robustness of HO of UE is solved, and the effect of effectively ensuring robustness of HO between a macro cell and a micro cell is further achieved.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a cell HO method according to embodiment 1 of the present disclosure;
Fig. 2 is a structure diagram of a cell HO device according to embodiment 1 of the present disclosure;
Fig. 3 is a flowchart of a cell HO method according to embodiment 2 of the present disclosure;
Fig. 4 is a structure diagram of a cell HO device according to embodiment 2 of the present disclosure;
Fig. 5 is a flowchart of a cell HO method according to embodiment 3 of the present disclosure;
Fig. 6 is a structure diagram of a cell HO device according to embodiment 3 of the present disclosure;
Fig. 7 is a flowchart of a cell HO method according to embodiment 4 of the present disclosure;
Fig. 8 is a structure diagram of a cell HO device according to embodiment 4 of the present disclosure;
Fig. 9 is a flowchart of cell HO according to example embodiment 1 of the present disclosure;
Fig. 10 is a flowchart of cell HO according to example embodiment 2 of the present disclosure;
Fig. 11 is a flowchart of cell HO according to example embodiment 3 of the present disclosure; and
Fig. 12 is a flowchart of cell HO according to example embodiment 4 of the present disclosure.

### Detailed Description of the Embodiments

The present disclosure will be described below with reference to the drawings and the embodiments in detail. It is important to note that the embodiments in the present disclosure and characteristics in the embodiments may be combined under a condition of no conflicts.

### Embodiment 1

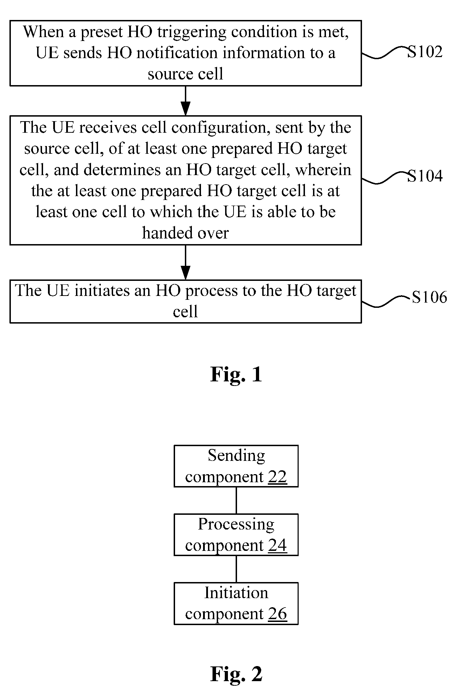

Embodiment 1 of the present disclosure provides a cell HO method, which may be applied to a UE side. Fig. 1 is a flowchart of a cell HO method according to embodiment 1 of the present disclosure, and as shown in Fig. 1, the method mainly includes the following steps (Step 102 to Step 106):
Step 102: when a preset HO triggering condition is met, UE sends HO notification information to a source cell;
Step 104: the UE receives cell configuration, sent by the source cell, of at least one prepared HO target cell, and determines an HO target cell, wherein the at least one prepared HO target cell is at least one cell to which the UE is able to be handed over; and
Step 106: the UE initiates an HO process to the HO target cell.

By the steps, the UE may determine the HO target cell according to the cell configuration sent by the source cell or cell measurement results, and then the UE initiates the cell HO process, so that robustness of HO between a macro cell and a micro cell may be effectively ensured.

In the embodiment, the preset HO triggering condition may include at least one of: an entering condition of a preset measurement event; a preset measurement event meeting a reporting condition; reception of indication information sent by the source cell; and reception of indication information sent by a neighbour cell of the source cell.

In the embodiment, the HO notification information may include at least one of: identification information of at least one cell meeting an entering condition of a measurement event; type information of the at least one cell meeting an entering condition of a measurement event; measurement results of the at least one cell meeting an entering condition of a measurement event; and a measurement result of the source cell.

In the embodiment, the cell configuration may include: an identifier of the at least one prepared HO target cell, the number of which is a preset number; and radio resource configuration information required by initiation of the HO process of the UE to the at least one prepared HO target cell.

In the embodiment, the UE may determine the HO target cell in a manner as follows: the UE determines the HO target cell according to measurement results obtained in a process of executing cell measurement operation.

In the embodiment, the step that the UE determines the HO target cell according to the measurement results may include that: the UE selects, according to the cell configuration, a cell with an optimal measurement result from the at least one prepared HO target cell as the HO target cell; or, the UE randomly selects, according to the cell configuration, one cell from at least one prepared HO target cell, of which the measurement results reach a preset threshold value, as the HO target cell, and if the measurement results of all of the at least one prepared HO target cell do not reach the preset threshold value, the UE selects a cell with a highest signal strength from the at least one prepared HO target cell as the HO target cell.

In the embodiment, Step 106 may be implemented in a manner as follows: the UE sends HO target cell information to the source cell, and initiates the HO process to the HO target cell after receiving success Ack information which is fed back by the source cell and configured to indicate a receiving success; or, the UE sends the HO target cell information to the source cell, and initiates the HO process to the HO target cell; or, the UE directly initiates the HO process to the HO target cell.

In the embodiment, the UE may determine the HO target cell according to the measurement results in a manner as follows: the UE determines a cell with an optimal measurement result as the HO target cell, wherein the cell with the optimal measurement result is a cell in the at least one prepared HO target cell or a cell except the at least one prepared HO target cell.

In the embodiment, the step that the UE initiates the HO process to the HO target cell may be implemented as follows: if the HO target cell determined by the UE is a cell in the at least one prepared HO target cell, the UE sends the HO target cell information to the source cell, and initiates the HO process to the HO target cell after receiving the success Ack information which is fed back by the source cell and configured to indicate the receiving success; or, the UE sends the HO target cell information to the source cell, and initiates the HO process to the HO target cell; or, the UE directly initiates the HO process to the HO target cell; and if the HO target cell determined by the UE is a cell except the at least one prepared HO target cell, the UE sends the HO target cell information to the source cell, and initiates the HO process according to an HO CMD sent by the source cell after receiving the HO CMD.

In an example embodiment, the HO target cell information includes at least one of: an identifier of the HO target cell and a signal strength measurement result of the HO target cell.

In an example embodiment, the success Ack information includes at least one of following information: an HARQ-Ack indicator sent by a physical layer of the source cell; and a STATUS Report of a measurement result, sent by an RLC layer of the source cell, of the HO target cell.

In the embodiment, after the step that the UE sends the HO target cell information to the source cell, the method may further include that: under a condition that the UE does not receive the success Ack information or receives failure Ack information configured to indicate a receiving failure and the UE confirms that the source cell does not successfully receive the HO target cell information, the UE executes one of following operations that: the HO process is stopped; the HO process is stopped, and an RRC connection reestablishment process is initiated; and the HO process is directly initiated to the HO target cell.

Embodiment 1 of the present disclosure provides a cell HO device, which is located in UE and configured to implement cell HO method provided by embodiment 1. Fig. 2 is a structure diagram of a cell HO device according to embodiment 1 of the present disclosure, and as shown in Fig. 2, the device may include: a sending component 22, a processing component 24 and an initiation component 26, wherein the sending component 22 is configured to, when a preset HO triggering condition is met, send HO notification information to a source cell; the processing component 24 is configured to receive cell configuration, sent by the source cell, of at least one prepared HO target cell, and determine an HO target cell, wherein the at least one prepared HO target cell is at least one cell to which the UE is able to be handed over; and the initiation component 26 is configured to initiate an HO process to the HO target cell.

### Embodiment 2

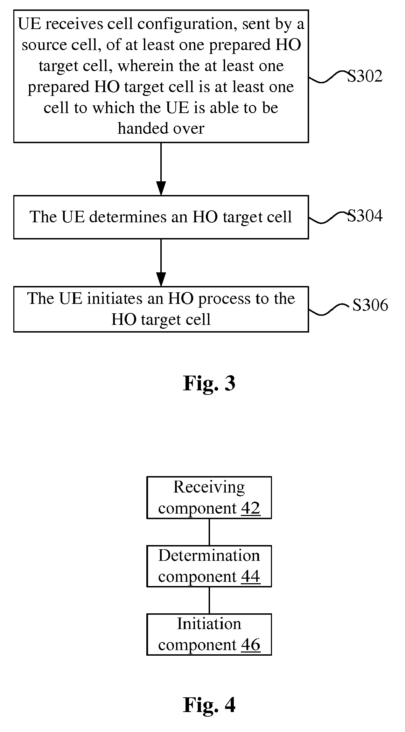

Embodiment 2 of the present disclosure provides a cell HO method, which may be applied to a UE side. Fig. 3 is a flowchart of a cell HO method according to embodiment 2 of the present disclosure, and as shown in Fig. 3, the method mainly includes the following steps (Step 302 to Step 306):
Step 302: UE receives cell configuration, sent by a source cell, of at least one prepared HO target cell, wherein the at least one prepared HO target cell is at least one cell to which the UE is able to be handed over;
Step 304: the UE determines an HO target cell; and
Step 306: the UE initiates an HO process to the HO target cell.

In the embodiment, the cell configuration may include: an identifier of the at least one prepared HO target cell, the number of which is a preset number; and radio resource configuration information required by initiation of the HO process of the UE to the at least one prepared HO target cell.

In the embodiment, the UE may determine the HO target cell in a manner as follows: the UE determines the HO target cell according to measurement results obtained in a process of executing cell measurement operation.

In the embodiment, the step that the UE determines the HO target cell according to the measurement results may be implemented as follows: the UE selects, according to the cell configuration, a cell with an optimal measurement result from the at least one prepared HO target cell as the HO target cell; or, the UE randomly selects, according to the cell configuration, one cell from at least one prepared HO target cell, of which the measurement results reach a preset threshold value, as the HO target cell, and if the measurement results of all of the at least one prepared HO target cell do not reach the preset threshold value, the UE selects a cell with a highest signal strength from the at least one prepared HO target cell as the HO target cell.

In the embodiment, Step 306 may be implemented as follows: the UE sends HO target cell information to the source cell, and initiates the HO process to the HO target cell after receiving success Ack information which is fed back by the source cell and configured to indicate a receiving success; or, the UE sends the HO target cell information to the source cell, and initiates the HO process to the HO target cell; or, the UE directly initiates the HO process to the HO target cell.

In the embodiment, the step that the UE determines the HO target cell according to the measurement results may be implemented as follows: the UE determines a cell with an optimal measurement result as the HO target cell, wherein the cell with the optimal measurement result is a cell in the at least one prepared HO target cell or a cell except the at least one prepared HO target cell.

In the embodiment, Step 306 may be implemented as follows: if the HO target cell determined by the UE is a cell in the at least one prepared HO target cell, the UE sends the HO target cell information to the source cell, and initiates the HO process to the HO target cell after receiving the success Ack information which is fed back by the source cell and configured to indicate the receiving success; or, the UE sends the HO target cell information to the source cell, and initiates the HO process to the HO target cell; or, the UE directly initiates the HO process to the HO target cell; and if the HO target cell determined by the UE is a cell except the at least one prepared HO target cell, the UE sends the HO target cell information to the source cell, and initiates the HO process according to an HO CMD sent by the source cell after receiving the HO CMD.

In an example embodiment, the HO target cell information includes at least one of: an identifier of the HO target cell and a signal strength measurement result of the HO target cell.

In an example embodiment, the success Ack information includes at least one of following information: an HARQ-Ack indicator sent by a physical layer of the source cell; and a STATUS Report of a measurement result, sent by an RLC layer of the source cell, of the HO target cell.

In the embodiment, after the step that the UE sends the HO target cell information to the source cell, the method may further include that: under a condition that the UE does not receive the success Ack information or receives failure Ack information configured to indicate a receiving failure and the UE confirms that the source cell does not successfully receive the HO target cell information, the UE executes one of following operations that: the HO process is stopped; the HO process is stopped, and an RRC connection reestablishment process is initiated; and the HO process is directly initiated to the HO target cell.

Embodiment 2 of the present disclosure provides a cell HO device, which is located in UE and configured to implement the cell HO method provided by embodiment 2. Fig. 4 is a structure diagram of a cell HO device according to embodiment 2 of the present disclosure, and as shown in Fig. 4, the device may include: a receiving component 42, a determination component 44 and an initiation component 46, wherein the receiving component 42 is configured to receive cell configuration, sent by a source cell, of at least one prepared HO target cell, wherein the at least one prepared HO target cell is at least one cell to which the UE is able to be handed over; the determination component 44 is configured to determine an HO target cell; and the initiation component 46 is configured to initiate an HO process to the HO target cell.

### Embodiment 3

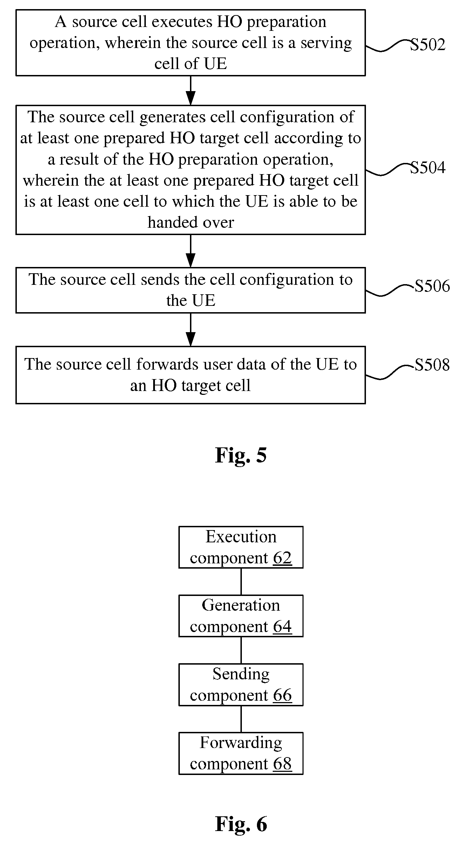

Embodiment 3 of the present disclosure provides a cell HO method, which may be applied to a network side. Fig. 5 is a flowchart of a cell HO method according to embodiment 3 of the present disclosure, and as shown in Fig. 5, the method mainly includes the following steps (Step 502 to Step 508):
Step 502: a source cell executes the HO preparation operation, wherein the source cell is a serving cell of UE;
Step 504: the source cell generates cell configuration of at least one prepared HO target cell according to a result of the HO preparation operation, wherein the at least one prepared HO target cell is at least one cell to which the UE is able to be handed over;
Step 506: the source cell sends the cell configuration to the UE; and
Step 508: the source cell forwards user data of the UE to an HO target cell.

In the embodiment, the source cell may execute HO preparation operation according to at least one of following information: HO notification information sent by the UE; statistical mobility information, obtained by the source cell, of the UE; load information of the source cell; and indication information, received by the source cell, of another cell, wherein the other cell is a neighbour cell of the source cell.

In the embodiment, when the source cell executes the HO preparation operation according to the HO notification information, one of following manners may be adopted: the source cell initiates an HO preparation process between the source cell and a preset number of cells in at least one cell included in the HO notification information according to the HO notification information; the source cell initiates an HO preparation process between the source cell and the cell with an optimal measurement result in at least one cell included in the HO notification information according to the HO notification information; and the source cell initiates an HO preparation process between the source cell and a preset type of cell in at least one cell included in the HO notification information according to the HO notification information.

In an example embodiment, the cell configuration may include: an identifier of the at least one prepared HO target cell, the number of which is a preset number; and radio resource configuration information required by initiation of the HO process of the UE to the at least one prepared HO target cell.

In the embodiment, the source cell may forward the user data of the UE to the HO target cell in one of manners as follows: the source cell forwards the user data to the HO target cell after the source cell successfully receives the HO target cell information from the UE; the source cell forwards the user data to the HO target cell after receiving data forwarding indication information sent by the HO target cell; and the source cell forwards the user data to the HO target cell after receiving an End Marker sent by an S-GW.

Embodiment 3 of the present disclosure provides a cell HO device, which is located in a source cell on a network side (the source cell is a serving cell of UE) and configured to implement the cell HO method provided by embodiment 3. Fig. 6 is a structure diagram of a cell HO device according to embodiment 3 of the present disclosure, and as shown in Fig. 6, the device may include: an execution component 62, a generation component 64, a sending component 66 and a forwarding component 68, wherein the execution component 62 is configured to execute HO preparation operation; the generation component 64 is configured to generate cell configuration of at least one prepared HO target cell according to a result of the HO preparation operation, wherein the at least one prepared HO target cell is at least one cell to which the UE is able to be handed over; the sending component 66 is configured to send the cell configuration to the UE; and the forwarding component 68 is configured to forward user data of the UE to an HO target cell.

### Embodiment 4

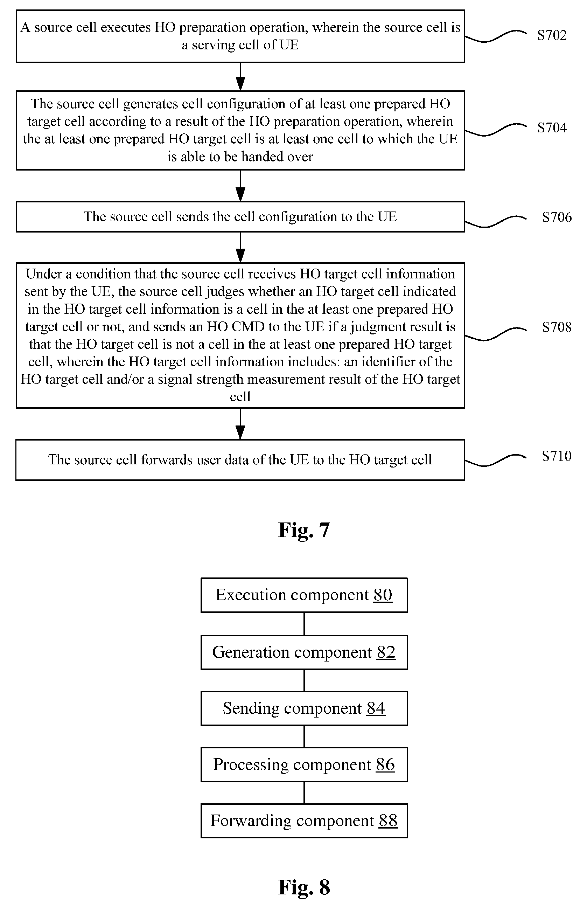

Embodiment 4 of the present disclosure provides a cell HO method, which may be applied to a network side. Fig. 7 is a flowchart of a cell HO method according to embodiment 4 of the present disclosure, and as shown in Fig. 7, the method mainly includes the following steps (Step 702 to Step 710):
Step 702: a source cell executes the HO preparation operation, wherein the source cell is a serving cell of UE;
Step 704: the source cell generates cell configuration of at least one prepared HO target cell according to a result of the HO preparation operation, wherein the at least one prepared HO target cell is at least one cell to which the UE is able to be handed over;
Step 706: the source cell sends the cell configuration to the UE;
Step 708: under a condition that the source cell receives HO target cell information sent by the UE, the source cell judges whether an HO target cell indicated in the HO target cell information is a cell in the at least one prepared HO target cell or not, and sends an HO CMD to the UE if a judgment result is that the HO target cell is not a cell in the at least one prepared HO target cell, wherein the HO target cell information includes: an identifier of the HO target cell and/or a signal strength measurement result of the HO target cell; and
Step 710: the source cell forwards user data of the UE to the HO target cell.

In the embodiment, the source cell may execute HO preparation operation according to at least one of following information: HO notification information sent by the UE; statistical mobility information, obtained by the source cell, of the UE; load information of the source cell; and indication information, received by the source cell, of another cell, wherein the other cell may be a neighbour cell of the source cell.

In the embodiment, when the source cell executes the HO preparation operation according to the HO notification information, one of following manners may be adopted: the source cell initiates an HO preparation process between the source cell and a preset number of cells in at least one cell included in the HO notification information according to the HO notification information; the source cell initiates an HO preparation process between the source cell and the cell with an optimal measurement result in at least one cell included in the HO notification information according to the HO notification information; and the source cell initiates an HO preparation process between the source cell and a preset type of cell in at least one cell included in the HO notification information according to the HO notification information.

In an example embodiment, the cell configuration may include: an identifier of the at least one prepared HO target cell, the number of which is a preset number; and radio resource configuration information required by initiation of the HO process of the UE to the at least one prepared HO target cell.

In the embodiment, the source cell may forward the user data of the UE to the HO target cell in one of manners as follows: the source cell forwards the user data to the HO target cell after successfully receiving the HO target cell information sent by the UE; the source cell forwards the user data to the HO target cell after receiving data forwarding indication information sent by the HO target cell; and the source cell forwards the user data to the HO target cell after receiving an End Marker sent by an S-GW.

Embodiment 4 of the present disclosure provides a cell HO device, which is located in a source cell on a network side (the source cell may be a serving cell of UE) and configured to implement the cell HO method provided by embodiment 4. Fig. 8 is a structure diagram of a cell HO device according to embodiment 4 of the present disclosure, and as shown in Fig. 8, the device may include: an execution component 80, configured to execute HO preparation operation; a generation component 82, configured to generate cell configuration of at least one prepared HO target cell according to a result of the HO preparation operation, wherein the at least one prepared HO target cell is at least one cell to which the UE is able to be handed over; a sending component 84, configured to send the cell configuration to the UE; a processing component 86, configured to, under a condition that HO target cell information sent by the UE is received, judge whether an HO target cell indicated in the HO target cell information is a cell in the at least one prepared HO target cell or not, and send an HO CMD to the UE if a judgment result is that the HO target cell is not a cell in the at least one prepared HO target cell, wherein the HO target cell information includes: an identifier of the HO target cell and/or a signal strength measurement result of the HO target cell; and a forwarding component 88, configured to forward user data of the UE to the HO target cell.

By the cell HO methods and devices provided by the abovementioned embodiments, under a condition that the UE or the network side triggers a cell HO mechanism, the UE may determine the HO target cell according to configuration information, sent by the source cell, of at least one cell to which the UE is able to be handed over, and then the UE or the network side initiates the cell HO process, so that the effect of effectively ensuring robustness of HO between a macro cell and a micro cell is achieved.

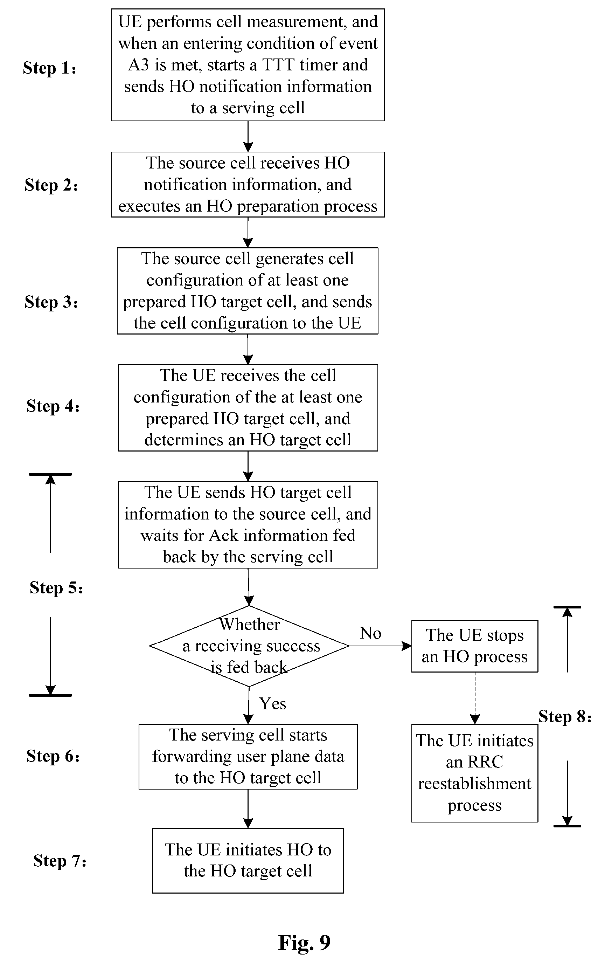

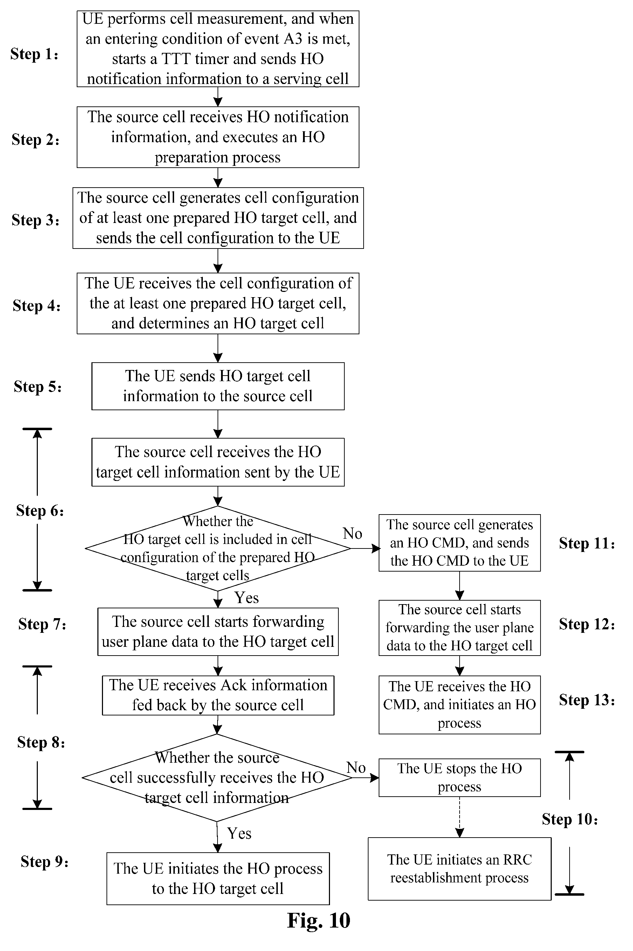

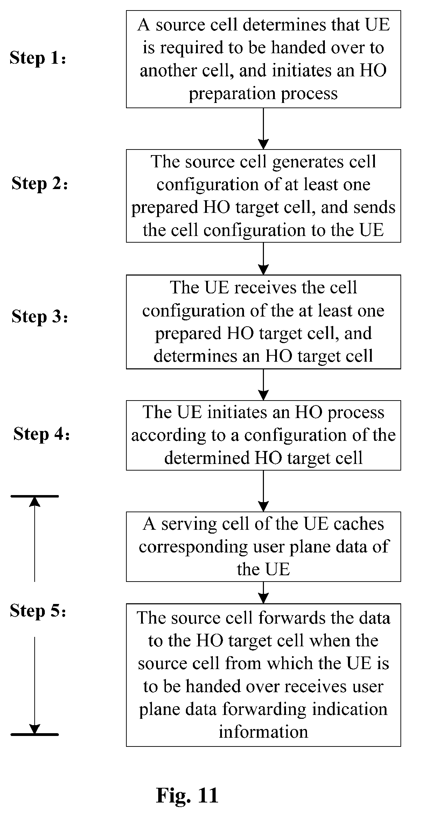

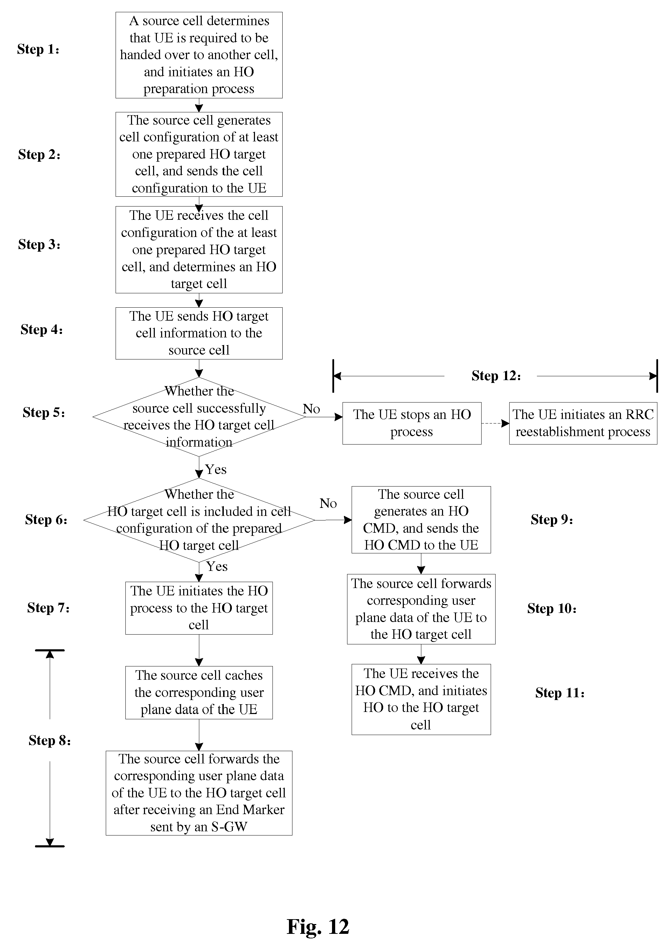

The cell HO methods and devices provided by embodiment 1 to embodiment 4 will be described below with reference to Fig. 9 to Fig. 12 and example embodiment 1 to example embodiment 4 in more detail.

### Example embodiment 1

In the example embodiment, cell A, cell B, cell C, cell D and cell E exist in an environment where UE is located respectively, wherein cell A is a serving cell of the UE, and the other four cells are neighbour cells of cell A and a micro cell (cell B) in cell A respectively. In the embodiment, a physical layer of the UE measures all detectable cells, and initiates an HO process according to measurement results, specifically including steps as follows.

Step 1: the UE measures all the detectable cells, and when there are cells meeting an entering condition of a measurement event (for example, event A3), the UE starts a TTT timer, and sends HO notification information to cell A.

In the example embodiment, the cells meeting the entering condition of event A3 are: cell B, cell C and cell D.

In the example embodiment, information in the HO notification information sent by the UE is any combination of following information: identification information of cells B, C and D, type information of cells B, C and D, the measurement results of cells B, C and D and the measurement result of cell A.

Step 2: cell A receives the HO notification information sent by the UE, and executes an HO preparation process according to the information.

In the embodiment, the step that cell A executes the HO preparation process according to the HO notification information includes one of the following conditions that:
(1) cell A initiates an HO preparation process with all the cells included in the information, namely initiates an HO preparation process with cells B, C and D respectively, according to the HO notification information;
(2) cell A initiates an HO preparation process with a preset number of cells with an optimal measurement result, namely initiates an HO preparation process with the cell with the optimal measurement result or a plurality of cells with the optimal measurement result in cells B, C and D, according to the HO notification information; and
(3) cell A initiates an HO preparation process with a preset type of cell, namely initiates an HO preparation process with cell B or initiates an HO preparation process with cell C and cell D, according to the HO notification information.

Step 3: cell A generates cell configuration of at least one prepared HO target cell, and sends the cell configuration to the UE.

In the example embodiment, the cell configuration, generated by an eNodeB of cell A, of the prepared HO target cells includes identifiers of a preset number of cells involved in the HO preparation process, and radio resource configurations required by HO of the UE to the preset number of cells, wherein the preset number of cells may be only one cell, or part of the cells, or all the cells.

In the step, the eNodeB of cell A only includes part or all results of the HO preparation process in the cell configuration of the at least one prepared HO target cell for the UE to determine an HO target cell.

Step 4: the UE receives the cell configuration of the at least one prepared HO target cell, and determines the HO target cell.

In the example embodiment, the UE determines the HO target cell according to the measurement results of the cells, and a method for determining the HO target cell may be one of the following methods:
(1) if the cell configuration of the at least one prepared HO target cell includes information of only one cell, the UE sets the cell as the HO target cell;
(2) if the cell configuration of the at least one prepared HO target cell includes information of multiple cells, the UE sets the cell with an optimal measurement result in these cells as the HO target cell, that is, the UE sets the strongest cell in cells B, C and D as the HO target cell; and
(3) the UE performs random selection in the cells which are included in the cell configuration of the at least one prepared HO target cell and of which the measurement results reach a preset threshold value, and determines the selected cell as the HO target cell, and if the measurement results of all the cells do not reach the preset threshold value, the UE selects a cell with an optimal measurement result as the HO target cell.

Wherein for the condition that the cell configuration of the at least one prepared HO target cell includes information of only one cell, the cell may be an HO target cell specified for the UE by a network.

In the example embodiment, the UE may determine the HO target cell at one of the following two time points:
(1) the UE determines the HO target cell immediately after receiving a potential HO target cell configuration; and
(2) the UE determines the HO target cell after reception of the potential HO target cell configuration and timeout of the TTT timer.

Step 5: the UE sends HO target cell information to cell A, and waits for Ack information fed back by cell A.

In the example embodiment, the UE sends the HO target cell information to cell A under a condition that the UE has determined the HO target cell after timeout of the TTT timer, wherein the HO target cell information is any combination of an identifier of the HO target cell and a signal strength measurement result of the HO target cell.

In the example embodiment, the Ack information fed back by cell A refers to one of following information: an HARQ feedback of the physical layer, or a STATUS Report of an RLC layer. Wherein if the UE obtains receiving success Ack information, Step 6 is executed; and if the UE does not receive the Ack information fed back by cell A, or obtains receiving failure Ack information, Step 7 is executed.

Step 6: cell A starts forwarding user data of the UE to the HO target cell of the UE.

In the example embodiment, cell A determines the HO target cell of the UE according to the received HO target cell information sent by the UE, and starts forwarding the user data of the UE to the cell.

Step 7: the UE initiates the HO process to the HO target cell.

In the example embodiment, the UE initiates the HO process (i.e. a random access process) to the HO target cell according to the radio resource configurations included in the cell configuration of the at least one prepared HO target cell.

Step 8: the UE stops the HO process, or, initiates an RRC connection reestablishment process on such a basis.

In the example embodiment, the HO notification information and the HO target cell information may be included in an MR specified in an existing protocol to be contained by the signalling.

In addition, the HO method is described with event A3 as an example in detail in the embodiment, and however, the HO method may also be triggered by another measurement event, besides event A3, or may be triggered by the network.

### Example embodiment 2

In the example embodiment, cell A, cell B, cell C and cell D exist in an environment where UE is located respectively, wherein cell A is a serving cell of the UE, and the other three cells are neighbour cells of cell A and a micro cell (cell B) in cell A respectively. In the embodiment, a physical layer of the UE measures all detectable cells, and initiates an HO process according to measurement results, specifically including steps as follows.

Step 1: the UE measures all the detectable cells, and when there are cells meeting an entering condition of a measurement event (for example, event A3), the UE starts a TTT timer, and sends HO notification information to cell A.

In the example embodiment, the cells meeting the entering condition of event A3 are: cell C and cell D.

In the example embodiment, a content in the HO notification information sent by the UE is any combination of following information: identification information of cells C and D, type information of cells C and D, the measurement results of cells C and D and the measurement result of cell A.

Step 2: cell A receives the HO notification information sent by the UE, and executes an HO preparation process according to the information.

In the example embodiment, the step that cell A executes the HO preparation process according to the HO notification information includes one of the following conditions that:
(1) cell A initiates an HO preparation process with all the cells included in the information, namely initiates an HO preparation process with cells C and D respectively, according to the HO notification information; and
(2) cell A initiates an HO preparation process with a preset number of cells with an optimal measurement result, namely initiates an HO preparation process with the cell with the optimal measurement result or a plurality of cells with the optimal measurement result in cells C and D, according to the HO notification information.

Step 3: cell A generates cell configuration of at least one prepared HO target cell, and sends the cell configuration to the UE.

In the example embodiment, the cell configuration, generated by an eNodeB of cell A, of the at least one prepared HO target cell includes identifiers of all the cells involved in the HO preparation process, i.e. identifiers of cell C and cell D, and radio resource configurations required by HO of the UE to the two cells.

In the step, the eNodeB of cell A only includes part or all results of the HO preparation process in the cell configuration of the at least one prepared HO target cell for the UE to determine an HO target cell.

Step 4: the UE receives the cell configuration of the at least one prepared HO target cell, and determines the HO target cell.

In the example embodiment, the UE determines the HO target cell according to the measurement results of the cells, that is, the UE only determines the cell with an optimal measurement result as the HO target cell, and may not consider whether the cell is a cell included in the cell configuration of the at least one prepared HO target cell or not.

In the example embodiment, if the cell with the optimal measurement result is cell B, the UE sets the cell as the HO target cell, that is, the HO target cell determined by the UE is not a cell included in the cell configuration of the at least one prepared HO target cell; and if the cell with the optimal measurement result is one of cell C and cell D, the UE sets the cell as the HO target cell, that is, the HO target cell determined by the UE is a cell included in the cell configuration of the at least one prepared HO target cell.

Step 5: the UE sends HO target cell information to cell A.

In the example embodiment, the UE sends the HO target cell information to cell A after timeout of the TTT timer, wherein the HO target cell information is any combination of an identifier of the HO target cell and a signal strength measurement result of the HO target cell. Practically, the HO target cell information is an MR specified in an existing protocol.

Step 6: the eNodeB of cell A receives the HO target cell information, and judges whether the cell is a cell included in the cell configuration of the at least one prepared HO target cell or not.

In the example embodiment, the eNodeB of cell A judges whether the cell corresponding to the HO target cell information is a cell included in the cell configuration of the at least one prepared HO target cell or not according to the received HO target cell information and the cell configuration of the at least one prepared HO target cell. If a judgment result is YES (that is, the HO target cell is one of cells C and D), Step 7 is executed, and if the judgment result is NO (that is, the HO target cell is cell B), Step 11 is executed.

Step 7: cell A starts forwarding user plane data of the UE to the HO target cell of the U E.

In the example embodiment, cell A determines the HO target cell of the UE according to the received HO target cell information sent by the UE, and starts forwarding the user plane data of the UE to the cell (cell C or cell D).

Step 8: the UE receives Ack information fed back by cell A.

In the example embodiment, the Ack information fed back by cell A refers to one of following information: an HARQ feedback of the physical layer, or a STATUS Report of an RLC layer. Wherein if the UE obtains receiving success Ack information, Step 9 is executed; and if the UE does not receive the Ack information fed back by cell A, or obtains receiving failure Ack information, Step 10 is executed.

Step 9: the UE initiates the HO process to the HO target cell.

In the example embodiment, the UE initiates the HO process (i.e. a random access process) to the HO target cell according to the radio resource configurations included in the cell configuration of the at least one prepared HO target cell.

Step 10: the UE stops the HO process, or, initiates an RRC connection reestablishment process on such a basis.

Step 11: the eNodeB of cell A generates an HO CMD, and sends the HO CMD to the U E.

In the example embodiment, since the HO preparation process does not involve cell B, the eNodeB of cell A initiates an HO preparation process for cell B at first in the embodiment, and then generates and sends the HO CMD to according to a result of the HO preparation process.

For a condition which is not described in the example embodiment, i.e. the condition that the HO preparation process does not involve cell B, the eNodeB of cell A may select not to execute the HO preparation process, namely use a result of the HO preparation process executed before or reinitiate the HO preparation process for the cell.

Step 12: the eNodeB of cell A starts forwarding the user plane data of the UE to an eNodeB of cell B.

Step 13: the UE receives the HO CMD sent by cell A, and initiates the HO process according to the HO CMD.

In the example embodiment, the HO notification information and the HO target cell information may be included in the MR specified in the existing protocol to be contained by the signalling. In addition, the HO method is described with event A3 as an example in detail in the embodiment, and however, the HO method may also be triggered by another measurement event, besides event A3.

### Example embodiment 3

In the example embodiment, cell A, cell B, cell C and cell D exist in an environment where UE is located, wherein cell A is a serving cell of the UE, cell B is a micro cell, cell B is located in cell A, and cell C and cell D are neighbour cells of cell A. The UE is located between cell B and cells C and D on an edge of cell A. In the embodiment, cell A triggers HO of the UE, specifically including steps as follows.

Step 1: cell A determines that the UE is required to be handed over to another cell, and initiates an HO preparation process.

In the example embodiment, cell A may judge whether the UE is required to be handed over to the other cell to be served or not according to one or combination of following information:
(1) mobility statistics made about the UE by cell A;
(2) current load information of cell A; and
(3) indication information received by cell A from the other cells.

In the example embodiment, when it is determined that the UE is required to be handed over to the other cell to be continuously served, cell A may initiate an HO preparation process with all potential HO target cells respectively, and may also initiate an HO preparation process with a preset number of potential HO target cells only. That is, cell A may initiate an HO preparation process with cells B, C and D respectively, and may also initiate an HO preparation process with part (preset number) of cells in these cells only.

Step 2: cell A generates cell configuration of at least one prepared HO target cell, and sends the cell configuration to the UE.

In the example embodiment, cell A generates the cell configuration of the at least one prepared HO target cell on the basis of the judgment method mentioned in "Step 1" and the implemented HO preparation process, wherein a content of the cell configuration of the at least one prepared HO target cell includes a preset number of prepared HO target cells, and radio resource configuration information required by initiation of an HO process of the UE to the preset number of cells.

Step 3: the UE receives the cell configuration of the at least one prepared HO target cell, and determines an HO target cell.

In the example embodiment, the UE determines the HO target cell by adopting the following method:
(1) if the cell configuration of the at least one prepared HO target cell includes only one cell, the UE sets the cell as the HO target cell;
(2) if the cell configuration of the at least one prepared HO target cell includes multiple cells, the UE sets the cell with an optimal measurement result, i.e. highest signal strength, as the HO target cell; and
(3) the UE performs random selection in the cells which are included in the cell configuration of the at least one prepared HO target cell and of which the measurement results reach a preset threshold value, and determines the selected cell as the HO target cell, and if the measurement results of all the cells do not reach the preset threshold value, the UE selects a cell with an optimal measurement result as the HO target cell.

Wherein for the condition that the cell configuration of the at least one prepared HO target cell includes only one cell, the cell may be an HO target cell specified for the UE by a network.

Step 4: the UE initiates the HO process to the HO target cell according to a configuration of the determined HO target cell.

In the example embodiment, the UE may initiate the HO process (i.e. a random access process) immediately after determining the HO target cell, or may initiate the HO process after waiting for a preset time length, wherein the preset waiting time length is controlled by a timer, and a length of the timer may be a default value, or automatically set by the UE, or specified by cell A (for example, included in the sent cell configuration of the at least one prepared HO target cell).

In the example embodiment, the UE may not send HO target cell information to cell A when initiating the HO process.

Step 5: cell A caches corresponding user plane data of the UE, and forwards the corresponding user plane data of the UE to the HO target cell when receiving user plane data forwarding indication information.

In the example embodiment, since the UE does not send the HO target cell information to cell A, cell A may not determine time and even the cell for forwarding of the user plane data of the UE, and cell A may cache the related user plane data of the UE. Meanwhile, the UE and the HO target cell may also continue executing a control plane HO process only.

After the control plane HO process between the UE and the HO target cell is implemented, the cell sends the user plane data forwarding indication information to cell A to notify cell A of forwarding the cached user plane data of the UE to the cell for the cell to continuously send, wherein the indication information may be new control plane signalling, or an indication identifier included in existing control plane signalling (for example: UE Context Release Msg).

### Example embodiment 4

In the example embodiment, cell A, cell B, cell C and cell D exist in an environment where UE is located, wherein cell A is a serving cell of the UE, cell B is a micro cell, cell B is located in cell A, and cell C and cell D are neighbour cells of cell A. The UE is located between cell B and cells C and D on an edge of cell A. In the embodiment, cell A triggers HO of the UE, specifically including steps as follows.

Step 1: cell A determines that the UE is required to be handed over to another cell, and initiates an HO preparation process.

In the example embodiment, cell A may judge whether the UE is required to be handed over to the other cell to be served or not according to one or combination of following information:
(1) mobility statistics made about the UE by cell A;
(2) current load information of cell A; and
(3) indication information received by cell A from the other cells.

In the example embodiment, when it is determined that the UE is required to be handed over to the other cell to be continuously served, cell A may initiate an HO preparation process with all potential HO target cells respectively, that is, cell A initiates an HO preparation process with cells B, C and D respectively.

Step 2: cell A generates cell configuration of at least one prepared HO target cell, and sends the cell configuration to the UE.

In the example embodiment, cell A generates the cell configuration of the at least one prepared HO target cell on the basis of the judgment method mentioned in "Step 1" and the implemented HO preparation process, wherein a content of the cell configuration of the at least one prepared HO target cell includes a preset number of prepared HO target cells (i.e. cell C and cell D, not including cell B), and radio resource configuration information required by initiation of an HO process of the UE to cell C and cell D.

Step 3: the UE receives the cell configuration of the at least one prepared HO target cell, and determines an HO target cell.

In the example embodiment, the UE determines the HO target cell according to measurement results of the cells, that is, the UE determines the cell with an optimal measurement result as the HO target cell only, and may not consider whether the cell is a cell included in the cell configuration of the at least one prepared HO target cell or not.

In the example embodiment, if the cell with the optimal measurement result is cell B, the UE sets the cell as the HO target cell, that is, the HO target cell determined by the UE is not a cell included in the cell configuration of the at least one prepared HO target cell; and if the cell with the optimal measurement result is one of cell C and cell D, the UE sets the cell as the HO target cell, that is, the HO target cell determined by the UE is a cell included in the cell configuration of the at least one prepared HO target cell.

Step 4: the UE sends HO target cell information to cell A.

In the example embodiment, the UE sends the HO target cell information to cell A after the UE determines the HO target cell, wherein the HO target cell information is any combination of an identifier of the HO target cell and a signal strength measurement result of the HO target cell.

Step 5: an eNodeB of cell A receives the HO target cell information, Step 6 is executed if the eNodeB of cell A successfully receives the information, otherwise Step 12 is executed.

Step 6: cell A judges whether the cell is a cell involved in the cell configuration of the at least one prepared HO target cell or not.

In the example embodiment, the eNodeB of cell A judges whether the cell corresponding to the HO target cell information is a cell included in the cell configuration of the at least one prepared HO target cell or not according to the received HO target cell information and the cell configuration of the at least one prepared HO target cell. If a judgment result is YES (that is, the HO target cell is one of cells C and D), Step 7 is executed, and if the judgment result is NO (that is, the HO target cell is cell B), Step 9 is executed.

Step 7: the UE initiates the HO process to the HO target cell according to the HO target cell.

In the example embodiment, the UE may initiate the HO process (i.e. a random access process) immediately after determining the HO target cell, or may initiate the HO process after waiting for a preset time length, wherein the preset waiting time length is controlled by a timer, and a length of the timer may be a default value, or automatically set by the UE, or specified by cell A (for example, included in the sent cell configuration of the at least one prepared HO target cell).

Step 8: cell A caches corresponding user plane data of the UE, and forwards the corresponding user plane data of the UE to the HO target cell when receiving an End Marker sent by an S-GW.

In the example embodiment, since cell A successfully receives the HO target cell information sent by the UE, cell A knows well the HO target cell of the UE, and cell A may cache the related user plane data of the UE and forward the corresponding user plane data of the UE to the corresponding HO target cell after receiving the End Marker sent by the S-GW.

Step 9: the eNodeB of cell A generates an HO CMD, and sends the HO CMD to the UE.

In the example embodiment, since the HO preparation process executed before involves cell B, so that the eNodeB of cell A may select not to execute the HO preparation process, namely use a result of the HO preparation process executed before or reinitiate the HO preparation process for the cell.

Step 10: the eNodeB of cell A starts forwarding the related user plane data of the UE to an eNodeB of cell B.

Step 11: the UE receives the HO CMD sent by cell A, and initiates the HO process according to the HO CMD.

Step 12: the UE stops the HO process, or, initiates an RRC connection reestablishment process on such a basis.

From the above, it can be seen that the present disclosure achieves technical effects as follows:
under a condition that the UE or a network side triggers a cell HO mechanism, the UE may determine the HO target cell according to configuration information, sent by the source cell, of at least one cell to which the UE is able to be handed over, and then the UE or the network side initiates the cell HO process, so that the problem in the related technology that the cell HO method performed according to the existing protocol has serious influence on robustness of HO of UE is solved, and the effect of effectively ensuring robustness of HO between a macro cell and a micro cell is further achieved.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, and the shown or described steps may be executed in a sequence different from that shown here under certain circumstances, or the components or steps may form each integrated circuit component respectively, or multiple components or steps therein can form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection of the present disclosure.

### Industrial Applicability

The technical solutions provided by the present disclosure may be applied to a cell HO process, and under a condition that the UE or the network side triggers the cell HO mechanism, the UE may determine the HO target cell according to the configuration information, sent by the source cell, of at least one cell to which the UE is able to be handed over, and then the UE or the network side initiates the cell HO process, so that the problem in the related technology that the cell HO method performed according to the existing protocol has serious influence on robustness of HO of UE is solved, and the effect of effectively ensuring robustness of HO between a macro cell and a micro cell is further achieved.

## Claims

1. A cell HandOver, HO, method, applied to a User Equipment, UE, side, the method comprising:
when a preset HO triggering condition is met, sending, by UE, HO notification information to a source cell;
receiving, by the UE, cell configuration, sent by the source cell, of at least one prepared HO target cell, and determining an HO target cell, wherein the at least one prepared HO target cell is at least one cell to which the UE is able to be handed over; and
initiating, by the UE, an HO process to the HO target cell.

2. The method as claimed in claim 1, wherein the preset HO triggering condition comprises at least one of:
an entering condition of a preset measurement event;
a preset measurement event meeting a reporting condition;
reception of indication information sent by the source cell; and
reception of indication information sent by a neighbour cell of the source cell.

3. The method as claimed in claim 1, wherein the HO notification information comprises at least one of:
identification information of at least one cell meeting an entering condition of a measurement event;
type information of at least one cell meeting an entering condition of a measurement event;
measurement results of at least one cell meeting an entering condition of a measurement event; and
a measurement result of the source cell.

4. The method as claimed in claim 1, wherein the cell configuration comprises:
an identifier of the at least one prepared HO target cell, the number of which is a preset number; and radio resource configuration information required by initiation of the HO process of the UE to the at least one prepared HO target cell.

5. The method as claimed in claim 1, wherein determining, by the UE, the HO target cell adopts a manner of:
determining, by the UE, the HO target cell according to measurement results obtained in a process of executing cell measurement operation.

6. The method as claimed in claim 5, wherein determining, by the UE, the HO target cell according to the measurement results comprises:
selecting, by the UE according to the cell configuration, a cell with an optimal measurement result from the at least one prepared HO target cell as the HO target cell; or,
randomly selecting, by the UE according to the cell configuration, one cell from at least one prepared HO target cell, of which the measurement results reach a preset threshold value, as the HO target cell, and if the measurement results of all of the at least one prepared HO target cell do not reach the preset threshold value, selecting, by the UE, a cell with a highest signal strength from the at least one prepared HO target cell as the HO target cell.

7. The method as claimed in claim 6, wherein initiating, by the UE, the HO process to the HO target cell comprises:
sending, by the UE, HO target cell information to the source cell, and initiating, by the UE, the HO process to the HO target cell after receiving success Acknowledgement, Ack, information which is fed back by the source cell and configured to indicate a receiving success; or,
sending, by the UE, the HO target cell information to the source cell, and initiating, by the UE, the HO process to the HO target cell; or,
directly initiating, by the UE, the HO process to the HO target cell.

8. The method as claimed in claim 5, wherein determining, by the UE, the HO target cell according to the measurement results comprises:
determining, by the UE, a cell with an optimal measurement result as the HO target cell, wherein the cell with the optimal measurement result is a cell in the at least one prepared HO target cell or a cell except the at least one prepared HO target cell.

9. The method as claimed in claim 8, wherein initiating, by the UE, the HO process to the HO target cell comprises:
if the HO target cell determined by the UE is a cell in the at least one prepared HO target cell, sending, by the UE, the HO target cell information to the source cell, and initiating, by the UE, the HO process to the HO target cell after receiving the success Ack information which is fed back by the source cell and configured to indicate the receiving success; or, sending, by the UE, the HO target cell information to the source cell, and initiating, by the UE, the HO process to the HO target cell; or, directly initiating, by the UE, the HO process to the HO target cell; and
if the HO target cell determined by the UE is a cell except the at least one prepared HO target cell, sending, by the UE, the HO target cell information to the source cell, and initiating, by the UE, the HO process according to an HO CMD sent by the source cell after receiving the HO CMD.

10. The method as claimed in claim 7 or 9, wherein the HO target cell information comprises at least one of:
an identifier of the HO target cell and a signal strength measurement result of the HO target cell.

11. The method as claimed in claim 7, wherein the success Ack information comprises at least one of following information:
a Hybrid Automatic Repeat Request, HARQ-Ack indicator sent by a physical layer of the source cell; and
a STATUS Report of a measurement result, sent by a Radio Link Control, RLC, layer of the source cell, of the HO target cell.

12. The method as claimed in claim 7, after sending, by the UE, the HO target cell information to the source cell, further comprising:
under a condition that the UE does not receive the success Ack information or receives failure Ack information configured to indicate a receiving failure and the UE confirms that the source cell does not successfully receive the HO target cell information, executing, by the UE, one of following operations:
stopping the HO process;
stopping the HO process, and initiating an RRC connection reestablishment process; and
directly initiating the HO process to the HO target cell.

13. A cell HandOver, HO, device, located in User Equipment, UE, the device comprising:
a sending component, configured to, when a preset HO triggering condition is met, send HO notification information to a source cell;
a processing component, configured to receive cell configuration, sent by the source cell, of at least one prepared HO target cell, and determine an HO target cell, wherein the at least one prepared HO target cell is at least one cell to which the UE is able to be handed over; and
an initiation component, configured to initiate an HO process to the HO target cell.

14. A cell HandOver, HO, method, applied to a User Equipment, UE, side, the method comprising:
receiving, by UE, cell configuration, sent by a source cell, of at least one prepared HO target cell, wherein the at least one prepared HO target cell is at least one cell to which the UE is able to be handed over;
determining, by the UE, an HO target cell; and
initiating, by the UE, an HO process to the HO target cell.

15. The method as claimed in claim 14, wherein the cell configuration comprises:
an identifier of the at least one prepared HO target cell, the number of which is a preset number; and radio resource configuration information required by initiation of the HO process of the UE to the at least one prepared HO target cell.

16. The method as claimed in claim 14, wherein determining, by the UE, the HO target cell adopts a manner of:
determining, by the UE, the HO target cell according to measurement results obtained in a process of executing cell measurement operation.

17. The method as claimed in claim 16, wherein determining, by the UE, the HO target cell according to the measurement results comprises:
selecting, by the UE according to the cell configuration, a cell with an optimal measurement result from the at least one prepared HO target cell as the HO target cell; or,
randomly selecting, by the UE according to the cell configuration, one cell from at least one prepared HO target cell, of which the measurement results reach a preset threshold value, as the HO target cell, and if the measurement results of all of the at least one prepared HO target cell do not reach the preset threshold value, selecting, by the UE, a cell with a highest signal strength from the at least one prepared HO target cell as the HO target cell.

18. The method as claimed in claim 17, wherein initiating, by the UE, the HO process to the HO target cell comprises:
sending, by the UE, HO target cell information to the source cell, and initiating, by the UE, the HO process to the HO target cell after receiving success Acknowledgement, Ack, information which is fed back by the source cell and configured to indicate a receiving success; or,
sending, by the UE, the HO target cell information to the source cell, and initiating, by the UE, the HO process to the HO target cell; or,
directly initiating, by the UE, the HO process to the HO target cell.

19. The method as claimed in claim 16, wherein determining, by the UE, the HO target cell according to the measurement results comprises:
determining, by the UE, a cell with an optimal measurement result as the HO target cell, wherein the cell with the optimal measurement result is a cell in the at least one prepared HO target cell or a cell except the at least one prepared HO target cell.

20. The method as claimed in claim 19, wherein initiating, by the UE, the HO process to the HO target cell comprises:
if the HO target cell determined by the UE is a cell in the at least one prepared HO target cell, sending, by the UE, the HO target cell information to the source cell, and initiating, by the UE, the HO process to the HO target cell after receiving the success Ack information which is fed back by the source cell and configured to indicate the receiving success; or, sending, by the UE, the HO target cell information to the source cell, and initiating, by the UE, the HO process to the HO target cell; or, directly initiating, by the UE, the HO process to the HO target cell; and
if the HO target cell determined by the UE is a cell except the at least one prepared HO target cell, sending, by the UE, the HO target cell information to the source cell, and initiating the HO process according to an HO Command, CMD, sent by the source cell after receiving the HO CMD.

21. The method as claimed in claim 18 or 20, wherein the HO target cell information comprises at least one of:
an identifier of the HO target cell and a signal strength measurement result of the HO target cell.

22. The method as claimed in claim 18, wherein the success Ack information comprises at least one of following information:
a Hybrid Automatic Repeat Request, HARQ-Ack indicator sent by a physical layer of the source cell; and
a STATUS Report of a measurement result, sent by a Radio Link Control, RLC, layer of the source cell, of the HO target cell.

23. The method as claimed in claim 18, after sending, by the UE, the HO target cell information to the source cell, further comprising:
under a condition that the UE does not receive the success Ack information or receives failure Ack information configured to indicate a receiving failure and the UE confirms that the source cell does not successfully receive the HO target cell information, executing, by the UE, one of following operations:
stopping the HO process;
stopping the HO process, and initiating an RRC connection reestablishment process; and
directly initiating, by the UE, the HO process to the HO target cell.

24. A cell HandOver, HO, device, located in User Equipment, UE, the device comprising:
a receiving component, configured to receive cell configuration, sent by a source cell, of at least one prepared HO target cell, wherein the at least one prepared HO target cell is at least one cell to which the UE is able to be handed over;
a determination component, configured to determine an HO target cell; and
an initiation component, configured to initiate the HO process to the HO target cell.

25. A cell HandOver, HO, method, applied to a network side, the method comprising:
executing, by a source cell, HO preparation operation, wherein the source cell is a serving cell of User Equipment, UE;
generating, by the source cell, cell configuration of at least one prepared HO target cell according to a result of the HO preparation operation, wherein the at least one prepared HO target cell is at least one cell to which the UE is able to be handed over;
sending, by the source cell, the cell configuration to the UE; and
forwarding, by the source cell, user data of the UE to an HO target cell.

26. The method as claimed in claim 25, wherein the source cell executes the HO preparation operation according to at least one of following information:
HO notification information sent by the UE;
statistical mobility information, obtained by the source cell, of the UE;
load information of the source cell; and
indication information, received by the source cell, of another cell, wherein the other cell is a neighbour cell of the source cell.

27. The method as claimed in claim 26, wherein when the source cell executes the HO preparation operation according to the HO notification information, one of following manners is adopted:
initiating, by the source cell according to the HO notification information, an HO preparation process between the source cell and a preset number of cells in at least one cell comprised in the HO notification information;
initiating, by the source cell according to the HO notification information, an HO preparation process between the source cell and a cell with an optimal measurement result in at least one cell comprised in the HO notification information; and
initiating, by the source cell according to the HO notification information, an HO preparation process between the source cell and a preset type of cell in at least one cell comprised in the HO notification information.

28. The method as claimed in claim 25, wherein the cell configuration comprises:
an identifier of the at least one prepared HO target cell, the number of which is a preset number; and radio resource configuration information required by initiation of the HO process of the UE to the at least one prepared HO target cell.

29. The method as claimed in claim 25, wherein forwarding, by the source cell, the user data of the UE to the HO target cell adopts one of manners of:
forwarding, by the source cell, the user data to the HO target cell after the source cell successfully receives the HO target cell information from the UE;
forwarding, by the source cell, the user data to the HO target cell after receiving data forwarding indication information sent by the HO target cell; and
forwarding, by the source cell, the user data to the HO target cell after receiving an End Marker sent by a Serving GateWay, S-GW.

30. A cell HandOver, HO, device, located in a source cell on a network side, wherein the source cell is a serving cell of User Equipment, UE, the device comprising:
an execution component, configured to execute HO preparation operation;
a generation component, configured to generate cell configuration of at least one prepared HO target cell according to a result of the HO preparation operation, wherein the at least one prepared HO target cell is at least one cell to which the UE is able to be handed over;
a sending component, configured to send the cell configuration to the UE; and
a forwarding component, configured to forward user data of the UE to an HO target cell.

31. A cell HandOver, HO, method, applied to a network side, the method comprising:
executing, by a source cell, HO preparation operation, wherein the source cell is a serving cell of User Equipment, UE;
generating, by the source cell, cell configuration of at least one prepared HO target cell according to a result of the HO preparation operation, wherein the at least one prepared HO target cell is at least one cell to which the UE is able to be handed over;
sending, by the source cell, the cell configuration to the UE;
under a condition that the source cell receives HO target cell information sent by the UE, judging, by the source cell, whether an HO target cell indicated in the HO target cell information is a cell in the at least one prepared HO target cell or not, and sending an HO Command, CMD, to the UE if a judgment result is that the HO target cell is not a cell in the at least one prepared HO target cell, wherein the HO target cell information comprises: an identifier of the HO target cell and/or a signal strength measurement result of the HO target cell; and
forwarding, by the source cell, user data of the UE to the HO target cell.

32. The method as claimed in claim 31, wherein the source cell executes the HO preparation operation according to at least one of following information:
HO notification information sent by the UE;
statistical mobility information, obtained by the source cell, of the UE;
load information of the source cell; and
indication information, received by the source cell, of another cell, wherein the other cell is a neighbour cell of the source cell.

33. The method as claimed in claim 31, wherein when the source cell executes the HO preparation operation according to the HO notification information, one of following manners is adopted:
initiating, by the source cell according to the HO notification information, an HO preparation process between the source cell and a preset number of cells in at least one cell comprised in the HO notification information;
initiating, by the source cell according to the HO notification information, an HO preparation process between the source cell and a cell with an optimal measurement result in at least one cell comprised in the HO notification information; and
initiating, by the source cell according to the HO notification information, an HO preparation process between the source cell and a preset type of cell in at least one cell comprised in the HO notification information.

34. The method as claimed in claim 31, wherein the cell configuration comprises:
an identifier of a preset number of potential HO target cells; and radio resource configuration information required by initiation of the HO process of the UE to the at least one prepared HO target cell.

35. The method as claimed in claim 31, wherein forwarding, by the source cell, the user data of the UE to the HO target cell adopts one of manners of:
forwarding, by the source cell, the user data to the HO target cell after successfully receiving the HO target cell information sent by the UE;
forwarding, by the source cell, the user data to the HO target cell after receiving data forwarding indication information sent by the HO target cell; and
forwarding, by the source cell, the user data to the HO target cell after receiving an End Marker sent by a Serving GateWay, S-GW.

36. A cell HandOver, HO, device, located in a source cell on a network side, wherein the source cell is a serving cell of User Equipment, UE, the device comprising:
an execution component, configured to execute HO preparation operation;
a generation component, configured to generate cell configuration of at least one prepared HO target cell according to a result of the HO preparation operation, wherein the at least one prepared HO target cell is at least one cell to which the UE is able to be handed over;
a sending component, configured to send the cell configuration to the UE;
a processing component, configured to, under a condition that HO target cell information sent by the UE is received, judge whether an HO target cell indicated in the HO target cell information is a cell in the at least one prepared HO target cell or not, and send an HO Command, CMD, to the UE if a judgment result is that the HO target cell is not a cell in the at least one prepared HO target cell, wherein the HO target cell information comprises: an identifier of the HO target cell and/or a signal strength measurement result of the HO target cell; and
a forwarding component, configured to forward user data of the UE to the HO target cell.
